# EUROPEAN PATENT APPLICATION

(11) **EP 4 579 900 A2**
(43) Date of publication of application: **02.07.2025**
(21) Application number: 24190408.5
(22) Date of filing: 23.07.2024
(51) Int. Cl.: H01M 50/152, H01M 50/167, H01M 50/171, H01M 50/342, H01M 50/559, H01M 50/56, H01M 50/578

(54) **CYLINDRICAL SECONDARY BATTERY**

(30) Priority: 28.12.2023 KR 20230194518
(71) Applicant: SAMSUNG SDI CO., LTD., Giheung-gu Yongin-si, Gyeonggi-do 17084 (KR)
(72) Inventor: Kim, Dae Kyu, 17084 Yongin-si, Gyeonggi-do (KR); Seo, Kwang Soo, 17084 Yongin-si, Gyeonggi-do (KR)
(74) Representative: Gulde & Partner

(57) **Abstract**

A cylindrical secondary battery (1) including an electrode assembly (200), a can (100) accommodating the electrode assembly (200), a cap assembly (400) electrically coupled to the electrode assembly (200) and coupled to one side of the can (100) to close an inlet of the can (100), and including a cap-up (410) exposed to the outside, and a gasket (500) between the cap assembly (400) and the can (100). The cap-up (410) may include a terminal portion (411) with a circular shape, a base portion (412) spaced apart from the terminal portion (411) and surrounding an outer side of the terminal portion (411), and bridge parts (420, 421, 422) configured to connect the terminal portion (411) to the base portion (412) and spaced apart from each other with a connection hole (430, 431, 432) therebetween. A width of a part of each of the bridge parts (420, 421, 422) connected to the terminal portion (411) may be less than a width of a part of each of the bridge parts (420, 421, 422) connected to the base portion (412).

## Description

### BACKGROUND

### 1. Field

Aspects of embodiments of the present disclosure relate to a cylindrical secondary battery with an improved cap assembly structure.

### 2. Discussion of Related Art

In general, a cylindrical secondary battery includes a cylindrical electrode assembly, a cylindrical can configured to accommodate the electrode assembly and an electrolyte, and a cap assembly coupled to an upper opening of the can to seal the can and to allow current generated in the electrode assembly to flow to an external device.

The cap assembly may include a cap-up (e.g., an upper cap or upper cap part), a vent plate, and a cap-down (e.g., a lower cap or lower cap part), and an insulator between the vent plate and the cap-down. A notch that fractures when an internal pressure of the secondary battery increases is formed in the vent plate. Gas discharged through the notch is discharged to the outside of the secondary battery through a piercing hole provided in the cap-up. However, since internal gas is discharged only through the piercing hole, the gas may not be quickly discharged when the internal pressure of the secondary battery increases. In addition, when the structural rigidity of the cap-up is low, the shape of the cap-up may be deformed by an external force such that the cap-up blocks the piercing hole, and thus the gas may not be smoothly discharged.

The above-described information disclosed in the technology that serves as the background of the present disclosure is only for improving understanding of the background of the present disclosure and thus may include information that does not constitute the related art.

### SUMMARY

Aspects of embodiments of the present disclosure relate to a cylindrical secondary battery having a cap assembly capable of securing a gas discharge flow path while maintaining a required compressive strength.

A cylindrical secondary battery according to an embodiment of the present disclosure may include an electrode assembly, a can accommodating the electrode assembly, a cap assembly electrically connected to the electrode assembly, coupled to one side of the can to close (or shield) an inlet of the can, and including a cap-up exposed to the outside, and a gasket between the cap assembly and the can.

In one or more embodiments, the cap-up may include a terminal portion with a circular shape, a base portion spaced apart from the terminal part and surrounding an outer side of the terminal portion, and a number of bridge parts configured to connect the terminal portion to the base portion and spaced apart from each other with a connection hole therebetween. A width of a portion of each of the bridge parts connected to the terminal portion may be less than a width of a portion of each of the bridge parts connected to the base portion.

In one or more embodiments, the width of the portion of the bridge part connected to the terminal portion is an upper width, the width of the portion of the bridge part connected to the base portion is a lower width, and the width of the portion of the bridge part located at a center (e.g., a portion of the bridge part having a narrowest width) is a center width, and the lower width may be greater than each of the upper width and the center width.

In one or more embodiments, the lower width may be greater than the upper width, and the upper width may be greater than the center width.

In one or more embodiments, the lower width may be greater than the center width, and the center width may be greater than the upper width.

In one or more embodiments, a ratio I of the upper width to the lower width may be defined as I=(upper width/lower width)x100, and I may range from approximately 52 to approximately 68.

In one or more embodiments, a section in which a value of the ratio I ranges from approximately 52 to approximately 56 is a first section, and a section in which the value of the ratio I ranges from approximately 57 to approximately 58 is a second section, and the rigidity of the cap-up in the first section may be lower than that in the second section.

In one or more embodiments, one of the bridge parts may include concave grooves on both sides of the bridge part and each concave groove may face the connection hole at one side of the bridge part.

In one or more embodiments, along a first direction a curvature of each of the side grooves may increase and the center width may decrease, and along a second direction the curvature of each of the side grooves may decrease and the center width may increase.

In one or more embodiments, the bridge parts may be spaced apart from each other at a same angle.

In one or more embodiments, the cap assembly may further include a cap-down below the cap-up, a vent plate between the cap-up and the cap-down, and an insulator between the vent plate and the cap-down.

A cylindrical secondary battery according to an embodiment of the present disclosure may include a can with a cylindrical shape and an upper side that is open, an electrode assembly accommodated in the can together with an electrolyte, and a cap assembly coupled to an upper part of the can and insulated from the can, electrically connected to the electrode assembly, and including a cap-up exposed to the outside.

In one or more embodiments, the cap-up may include a terminal portion with a circular shape, a base portion spaced apart from the terminal portion, located below the terminal portion, and installed in a ring shape, and a number of bridge parts configured to connect the terminal portion and the base portion and spaced apart from each other with a connection hole therebetween.

In one or more embodiments, a width of a part of the bridge part connected to the terminal portion is an upper width, and a width of a portion of the bridge part connected to the base portion is a lower width, and the lower width may be greater than the upper width.

In one or more embodiments, the cylindrical secondary battery may further include a gasket installed the cap assembly and the can, made of an insulating material, and surrounding an edge of the cap assembly.

In one or more embodiments, the can may include a bottom part with a circular shape, a side part extending upward from an edge of the bottom part, a beading part extending from the side part and recessed inward at a upper part of the electrode assembly to support a lower part of the gasket, and a crimping part extending upward from the beading part and bent inward and surrounding an upper part of the gasket.

In one or more embodiments, the bridge part may include concave grooves on both sides of the bridge part with each concave groove facing the connection hole on one side of the bridge part, and a portion of the bridge part having a narrowest width is a center width, and a curvature of each of the concave grooves and the center width may be inversely proportional to each other.

In one or more embodiments, the upper width may be greater than the center width.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view illustrating a cylindrical secondary battery according to one embodiment of the present disclosure.
FIG. 2 is a cross-sectional view of the cylindrical secondary battery according to one embodiment of the present disclosure.
FIG. 3 is a cross-sectional view illustrating a cap assembly according to one embodiment of the present disclosure.
FIG. 4 is a cross-sectional view illustrating another embodiment of a vent plate according to one embodiment of the present disclosure.
FIG. 5 is a perspective view illustrating a cap-up according to one embodiment of the present disclosure.
FIG. 6 is a plan view of the cap-up according to one embodiment of the present disclosure.
FIGS. 7 to 9 are plan views illustrating a terminal part and a bridge part according to one embodiment of the present disclosure.
FIGS. 10 and 11 are views illustrating side grooves formed in the bridge part according to one embodiment of the present disclosure.
FIG. 12 is a view illustrating a configuration in which an upper width of the bridge part according to one embodiment of the present disclosure is greater than a center width of the bridge part.
FIG. 13 is a view illustrating a configuration in which the center width of the bridge part according to one embodiment of the present disclosure is greater than the upper width.

### DETAILED DESCRIPTION

Embodiments of the present disclosure are provided to more fully describe the present disclosure to those skilled in the art, and the following embodiments may be modified in many different forms, and the scope of the present disclosure is only defined by the appended claims and not limited to the following embodiments. Rather, these embodiments are provided so that the present disclosure will be thorough and complete and will fully convey the technical concept of the present disclosure to those skilled in the art.

In addition, in the drawings below, the thickness or size of each layer is exaggerated for convenience and clarity of illustration, and like reference numerals refer to like elements in the drawings. As used in the present specification, the term "and/or" may include any and all combinations of one or more of the associated listed items. In addition, in the present specification, it is to be understood that when member A is referred to as being "connected to" member B, member A may be directly connected to member B, or member C may be interposed between members A and B such that member A is indirectly connected to member B.

The terms used herein are for the purpose of describing specific embodiments and are not intended to limit the present disclosure. As used in the present specification, a singular form may include a plural form unless the context clearly indicates otherwise. In addition, the terms "comprise" or "include" and/or "comprising" or "including," when used in the present specification, specify the presence of stated shapes, numbers, steps, operations, members, elements, and/or groups thereof, but do not preclude the presence or addition of one or more other shapes, numbers, steps, operations, members, elements, and/or groups thereof.

In the present specification, although the terms "first," "second," and the like may be used to describe various members, components, regions, layers, and/or parts, these members, components, regions, layers, and/or parts are not to be limited by these terms. These terms are used to distinguish one member, component, region, layer, or part from another member, component, region, layer, or part. Thus, a first member, component, region, layer, or part described below may also refer to a second member, component, region, layer, or part without departing from the teachings of the present disclosure.

Spatially relative terms, such as "beneath," "below," "lower," "above," "upper," may be used herein for easy understanding of one element or feature and another element(s) or feature(s) as illustrated in the drawings. These spatially relative terms are intended for ease of comprehension of the present disclosure according to various process states or usage states of the present disclosure, and are not intended to limit the present disclosure. For example, when an element or feature in the drawings is turned over, the element or feature described as "beneath," or "below" may be changed to "above" or "upper." Thus, the term "beneath" may encompass the term "above" or "below."

Hereinafter, a cylindrical secondary battery 1 according to an embodiment of the present disclosure will be described in detail with reference to the accompanying drawings.

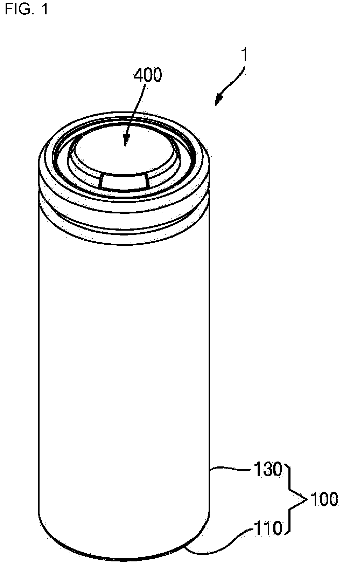

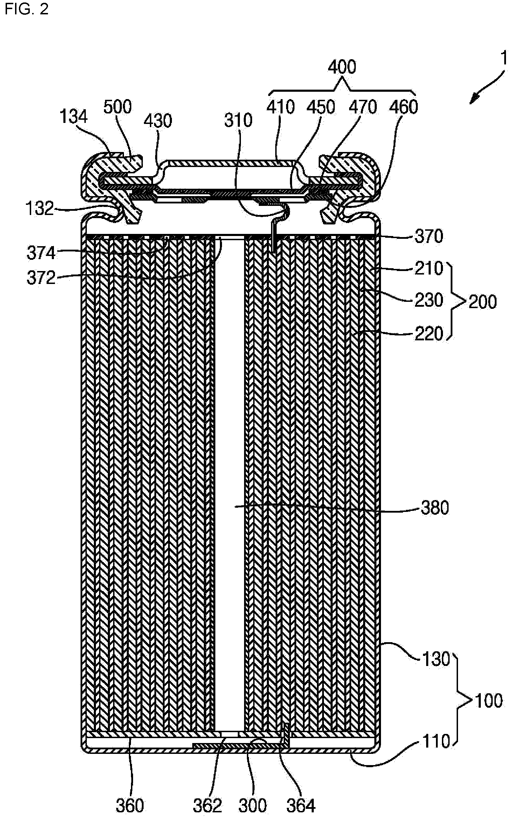

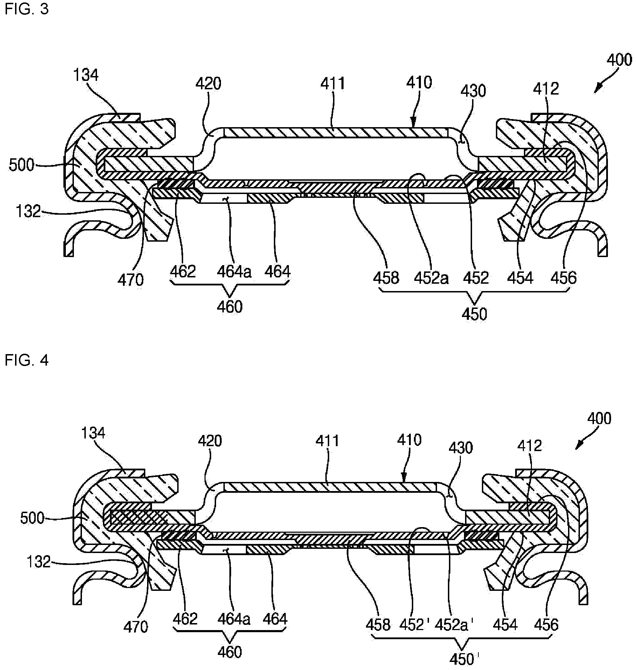

FIG. 1 is a perspective view illustrating a cylindrical secondary battery 1 according to one embodiment of the present disclosure, FIG. 2 is a cross-sectional view of the cylindrical secondary battery 1 according to one embodiment of the present disclosure, FIG. 3 is a cross-sectional view illustrating a cap assembly 400 according to one embodiment of the present disclosure, and FIG. 4 is a cross-sectional view illustrating a vent plate 450' according to one embodiment of the present disclosure.

As shown in FIGS. 1 to 4, the cylindrical secondary battery 1 according to one embodiment of the present disclosure may include a can 100, an electrode assembly 200, and a cap assembly 400. In addition, the cylindrical secondary battery 1 may further include at least one of a negative electrode tab 300, a positive electrode tab 310, a first insulating plate 360, a second insulating plate 370, a center pin 380, and a gasket 500.

The can 100 accommodating the electrode assembly 200 may have a cylindrical shape with an open upper side (e.g., an open upper end). The can 100 according to one embodiment of the present disclosure may include a circular bottom part 110, a side part 130 extending upward from an edge (e.g., a peripheral edge) of the bottom part 110, a beading part 132 extending inward from the side part 130 and recessed inward at a upper part of the electrode assembly 200 to support a lower part of the gasket 500, and a crimping part 134 extending upward from the beading part 132 and bent inward and surrounding an upper part of the gasket 500.

The can 100 includes the circular bottom part 110 and the side part 130 extending upward from the bottom part 110. An opening is formed at an upper end or portion of the side part 130. The can 100 may be formed of steel, a steel alloy, nickel-plated steel, a nickel-plated steel alloy, aluminum, an aluminum alloy, or an equivalent thereof, but the present disclosure is not limited to these materials. The cap assembly 400 is inserted through the opening of the can 100. The beading part 132 and the crimping part 134 may be formed on the side part 130 so that the inserted cap assembly 400 is retained and is not separated to the outside through the opening of the can 100.

The beading part 132 is located at a lower part of the cap assembly 400 and is recessed in a direction toward the inside of the can 100. The gasket 500 may be located between the beading part 132 and the cap assembly 400.

The crimping part 134 may extend from the beading part 132 and surround an upper part of the cap assembly 400. The gasket 500 may be located between the crimping part 134 and the cap assembly 400. The crimping part 134 is bent in an inward direction of the can 100. The beading part 132 and the crimping part 134 constrain the downward and upward movement of the cap assembly 400 such that the cap assembly 400 is not separated from the can 100. In addition, in the secondary battery manufacturing process, the electrode assembly 200 may be inserted into the can 100 together with an electrolyte through the opening of the can 100.

The electrode assembly 200 accommodated together with the electrolyte in the can 100 may be formed in various shapes. The electrode assembly 200 according to one embodiment of the present disclosure includes a negative electrode plate 210, a positive electrode plate 220, and a separator 230.

A negative electrode active material may be formed on both surfaces of the negative electrode plate 210. In one or more embodiments, the negative electrode active material may be graphite, carbon, or the like. A positive electrode active material may be formed on both surfaces of the positive electrode plate 220. In one or more embodiments, the positive electrode active material may be made of a transition metal oxide, and the transition metal oxide may include, for example, LiCoO₂, LiNiO₂, LiMn₂O₄, or the like.

The separator 230 is between the negative electrode plate 210 and the positive electrode plate 220 to prevent a short circuit and allow the movement of lithium ions. The negative electrode plate 210, the positive electrode plate 220, and the separator 230 may be wound in a substantially cylindrical shape and accommodated inside the can 100.

In one or more embodiments, the negative electrode plate 210 may be made of copper (Cu) or nickel (Ni) foil, the positive electrode plate 220 may be made of aluminum (Al) foil, and the separator 230 may be made of polyethylene (PE) or polypropylene (PP), but the present disclosure is not limited to these materials.

In one or more embodiments, the negative electrode tab 300 may protrude a predetermined length below the negative electrode plate 210 and may be fixed to the negative electrode plate 210 by welding. In one or more embodiments, the positive electrode tab 310 may protrude a predetermined length above the positive electrode plate 220 and may be fixed to the positive electrode plate 220 by welding. In one or more embodiments, the installation positions of the negative electrode tab 300 and the positive electrode tab 310 may be reversed.

The negative electrode tab 300 may be made of a copper or nickel material, and the positive electrode tab 310 may be made of an aluminum material, but the present disclosure is not limited to these materials. The negative electrode tab 300 may be welded to the bottom part 110 of the can 100 such that the can 100 may operate as a negative electrode. In one or more embodiments, the positive electrode tab 310 may be welded to the bottom part 110 of the can 100 such that the can 100 may operate as a positive electrode. In the embodiment depicted in FIGS. 1 to 4, the negative electrode tab 300 is welded to the bottom part 110 of the can 100.

In addition, the first insulating plate 360 and the second insulating plate 370 may be located on the lower and upper parts of the electrode assembly 200, respectively. The first insulating plate 360 prevents (or at least mitigates against) the positive electrode plate 220 from electrically contacting the bottom part 110 of the can 100, and the second insulating plate 370 prevents (or at least mitigates against) the negative electrode plate 210 from electrically contacting the cap assembly 400.

A first hole 362 (e.g., a lower hole) communicating with the center pin 380 and a second hole 364 allowing the negative electrode tab 300 to pass therethrough are provided in the first insulating plate 360 located on the lower part of the electrode assembly 200. Each of the first hole 362 and the second hole 364 has a hole shape passing through the first insulating plate 360 in a vertical direction.

The first hole 362 guides a large amount of gas to move upward through the cylindrical center pin 380 when the large amount of gas is generated by an abnormality in the secondary battery 1. The negative electrode tab 300 may be welded to the bottom part 110 of the can 100 through the second hole 364.

A first hole 372 (e.g., an upper hole), which allows a large amount of gas to move to the cap assembly 400 when the large amount of gas is generated by an abnormality in the secondary battery, is provided in the second insulating plate 370 located on the upper part of the electrode assembly 200. In addition, a second hole 374 allowing the positive electrode tab 310 to pass therethrough may be provided in the second insulating plate 370. Each of the first hole 372 and the second hole 374 has a hole shape passing through the second insulating plate 370 in the vertical direction.

The positive electrode tab 310 may be welded to a cap-down 460, which will be described below, through the second hole 374. A plurality of second holes 374 may be formed to serve as inlets through which an electrolyte is injected into the electrode assembly 200 in an electrolyte injection process.

In one or more embodiments, other current collecting structures may be utilized in the secondary battery of the present embodiment. In one or more embodiments, current collector plates electrically connected to a negative electrode uncoated part and a positive electrode uncoated part, respectively, may be provided, wherein the negative and positive electrode uncoated parts on which an active material is not applied are formed on the negative electrode plate 210 and the positive electrode plate 220, respectively. The current collector plates may be provided at positions of the insulating plates described above. In one or more embodiments, a negative electrode current collector plate may be electrically connected to the can 100, and a positive electrode current collector plate may be electrically connected to the cap assembly and insulated from the can 100.

The electrode assembly 200 may be supported by the center pin 380. The center pin 380 may be a hollow circular pipe, and may be coupled to substantially the center of the electrode assembly 200. The center pin 380 may be formed of steel, a steel alloy, nickel-plated steel, a nickel-plated steel alloy, aluminum, an aluminum alloy, or polybutylene terephthalate, but the present disclosure is not limited to these materials. The center pin 380 serves to suppress the deformation of the electrode assembly 200 during charging and discharging of the secondary battery 1 and serves as a path through which gas generated inside the secondary battery moves. In one or more embodiments, the center pin 380 may be omitted.

The cap assembly 400 is electrically connected to the electrode assembly 200 and is coupled to one side of the can 100 to close (e.g., seal) an inlet of the can 100. The cap assembly 400 is coupled to an upper part of the can 100 and insulated from the can 100. In one or more embodiments, the cap assembly 400 may include a cap-up 410 exposed to the outside.

The cap assembly 400 according to one embodiment of the present disclosure may include the cap-up 410 exposed to the outside of the can 100, the cap-down 460 below the cap-up 410, a vent plate 450 between the cap-up 410 and the cap-down 460, and an insulator 470 between the vent plate 450 and the cap-down 460. In FIG. 2, a direction facing the center pin 380 is defined as the inward direction and a direction away from the center pin 380 is defined as an outward direction.

The cap-up 410 protrudes above the cap assembly 400 and serves as a terminal. In one or more embodiments, the cap-up 410 is located at an uppermost part of the cap assembly 400 and may include connection holes 430 through which gas generated inside the can 100 is discharged to the outside.

The cap-up 410 may have a substantially disk shape with a predetermined region protruding convexly upward around its central axis. The central axis may be an imaginary line passing through a terminal center point C, which will be described below, in the vertical direction.

At least one connection hole 430 may be formed at a boundary between the disk part and the protruding part. The remaining part in which the connection holes 430 are not formed may be defined as a bridge. A detailed structure of the cap-up 410 will be described below. The vent plate 450 may be below the cap-up 410, and the vent plate 450 may surround an edge of the cap-up 410.

The vent plate 450 is between the cap-up 410 and the cap-down 460 and electrically connected to the cap-up 410. The vent plate 450 has a substantially disk shape, with an edge bent toward the edge of the cap-up 410 and in contact with a lower part of the edge of the cap-up 410. The vent plate 450 may be bent again toward the inside of the can 100 at the part in contact with the cap-up 410 such that the vent plate 450 is in contact with an upper part of the edge of the cap-up 410.

The vent plate 450 according to one embodiment of the present disclosure may include a vent bottom portion 452, a first support portion, a second support portion, and a contact portion 458. The disk portion of the vent plate 450, which is not bent, is defined as the vent bottom portion 452, a portion thereof that is bent from the vent bottom portion 452 toward the cap-up 410 is defined as a first support portion 454, and a part thereof that is bent in the inward direction from the first support portion 454 is defined as a second support portion 456. The second support portion 456 surrounds the edge of the cap-up 410.

A portion that protrudes convexly downward from the vent bottom portion 452 and is in contact with the cap-down 460 is defined as the contact portion 458. The vent plate 450 is formed such that all regions except for the contact portion 458 are not in contact with the cap-down 460. At least one notch 452a may be formed in the vent bottom portion 452 of the vent plate 450. In one or more embodiments, the notch 452a may be formed in a circular shape in the vent bottom portion 452.

In one or more embodiments, as shown in FIG. 4, notches 452a' may be formed in a vent bottom portion 452', and may be formed to correspond to positions of bridge parts 420 of the cap-up 410 to be described below. At least some or all of the notches 452a' may be formed to correspond to the positions of the bridge parts 420 of the cap-up 410. When the pressure of gas inside the can 100 is greater than a predetermined breaking pressure, the notch 452a' may fracture as the vent plate 450 is reversed in an upward direction. Accordingly, the gas inside the can 100 may be quickly discharged to the outside through the connection holes 430 of the cap-up 410.

The cap-down 460 is below the cap-up 410. The cap-down 460 is = below the vent plate 450 and has a substantially disk shape. In one or more embodiments, the cap-down 460 may be formed of aluminum, an aluminum alloy, and or an equivalent thereof, but the present disclosure is not limited to these materials. The cap-down 460 serves to support the cap-up 410 to prevent (or at least mitigate) the cap-up 410 from being deformed by an external force.

The cap-down 460 according to one embodiment of the present disclosure includes a cap-down bottom portion 464 and a third support portion 462, and a piercing hole 464a may be provided in the cap-down bottom portion 464. An edge of the cap-down 460 is bent toward the vent plate 450 to form the third support portion 462. The insulator 470 is between the third support portion 462 and the vent plate 450.

The disk portion of the cap-down 460, which is not bent, is defined as the cap-down bottom portion 464, and the cap-down bottom portion 464 is spaced apart from the vent bottom portion 452 of the vent plate 450 by a set separation distance (e.g., a gap). A substantially central part of the cap-down bottom portion 464 is in contact with the contact portion 458 of the vent plate 450. The piercing hole 464a through which gas moves may be formed in the cap-down bottom portion 464. Thus, the internal gas may be discharged to the outside of the can 100 through the notch 452a of the vent plate 450 and the connection hole 430 of the cap-up 410 via the piercing hole 464a of the cap-down 460.

The insulator 470 is between the vent plate 450 and the cap-down 460 and is an insulating member that blocks the movement of electricity (electric current). The insulator 470 serves as a spacer so that the vent plate 450 and the cap-down 460 can maintain a spaced-apart state, except at the contact portion 458.

The insulator 470 is made of an insulating material that blocks the vent plate 450 and the cap-down 460 from being electrically connected to each other, except at the contact portion 458. The insulator 470 may be formed in a circular ring shape having a predetermined width when viewed from above. In one or more embodiments, the insulator 470 may be formed of polyethylene (PE), polypropylene (PP), polystyrene (PS), an ethylene-vinyl acetate copolymer (EVA), or an equivalent thereof, but the present disclosure is not limited thereto. The insulator 470 may be coupled to the vent plate 450 and the cap-down 460 by ultrasonic welding, laser welding, fusion, or the like.

The gasket 500 between the can 100 and the cap assembly 400 is made of an insulating material that blocks electrical connection. Since the gasket 500 is installed (located) between the cap assembly 400 and the can 100, the cap assembly 400 and the can 100 are prevented from being electrically connected to each other. The gasket 500 according to one embodiment of the present disclosure is installed (located) between the cap assembly 400 and the can 100, and surrounds an edge of the cap assembly 400.

In the secondary battery 1 with the above-described configuration, the cap-up 410 may have a compressive strength such that the cap-up 410 is configured not to block the connection hole 430, which is a gas discharge flow path, when pressure is applied from the outside.

When the compressive strength of the cap-up 410 is excessively low, all of the bridge parts 420 may fracture when the internal gas is discharged, which is advantageous for gas discharge. However, when pressure is applied from the outside, the cap-up 410 may be distorted, blocking the connection hole 430, which is a gas discharge flow path, and thereby preventing gas discharge.

When the compressive strength of the cap-up 410 is excessively high, the bridge part 420 may not fracture when gas inside the secondary battery is discharged. Thus, it may be difficult to quickly discharge an internal gas because the gas is discharged only through the connection hole 430. Accordingly, in order to quickly discharge the internal gas while appropriately maintaining the compressive strength of the cap-up 410, the bridge part 420 may be cut to provide an additional flow path.

Accordingly, in the cap-up 410 according to one embodiment of the present disclosure, a width length of the bridge part 420 may be selected such that the secondary battery 1 can provide an internal gas discharge flow path while maintaining sufficient compressive strength of the cap-up 410.

Hereinafter, a structure of the cap-up 410 according to various embodiments of the present disclosure will be described in detail.

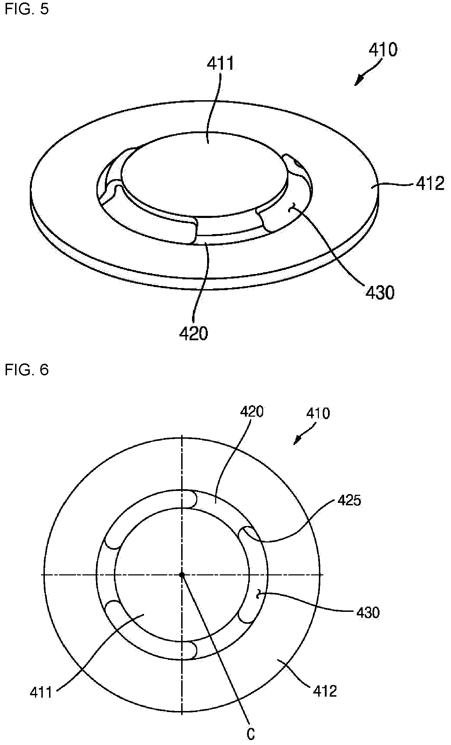

FIG. 5 is a perspective view illustrating the cap-up 410 according to one embodiment of the present disclosure, and FIG. 6 is a plan view of the cap-up 410 according to one embodiment of the present disclosure. As shown in FIGS. 5 and 6, the cap-up 410 according to one embodiment of the present disclosure includes a terminal portion 411, a base portion 412, the bridge parts 420, and the connection holes 430.

The terminal portion 411 may have a circular plate shape. The terminal portion 411 is electrically connected to the electrode assembly 200, and may protrude outward from the cap assembly 400. The terminal portion 411 may be a disk or a plate formed in various shapes. The terminal portion 411 and the vent plate 450 may be electrically connected to each other, the vent plate 450 and the cap-down 460 may be electrically connected to each other, and the cap-down 460 and the electrode assembly 200 may be electrically connected to each other.

The base portion 412 is spaced apart from the terminal portion 411 and located below the terminal portion 411. In one or more embodiments, the base portion 412 may have a ring shape. The base portion 412 according to one embodiment of the present disclosure is spaced apart from the terminal portion 411 and has a shape surrounding an outer side of the terminal portion 411. The center of the terminal portion 411 is referred to as the terminal center point C (see FIG. 6), and the base portion 412 may extend in a circular arc direction around the terminal center point C. A circular hole may be formed in the center of the base portion 412, and the terminal portion 411 may be located above the circular hole. The terminal portion 411 and the base portion 412 are connected to each other by the bridge parts 420.

The bridge parts 420 connect the terminal portion 411 to the base portion 412 and are spaced apart from each other with the connection hole 430 therebetween (e.g., one connection hole 430 is between each pair of adjacent bridge parts 420). A plurality of bridge parts 420 are formed, an upper side of each of the bridge parts 420 is connected to the terminal portion 411, and a lower side of each of the bridge parts 420 is connected to the base portion 412.

In one or more embodiments, the cap-up 410 may include two or more bridge parts 420 and the bridge parts 420 may be spaced apart from each other at the same (or substantially the same) angle. In one or more embodiments in which the cap-up 410 includes three bridge parts 420, each bridge part 420 may be spaced apart from each other at an interval of approximately 120°. However, the number of bridge parts 420 and the angular interval of the bridge parts 420 may be modified in various embodiments.

The bridge part 420 may have an upwardly inclined shape. The bridge parts 420 may have a plate shape with a constant width (or a substantially constant width). Each of the connection holes 430 through which gas moves is provided between adjacent bridge parts 420. Each of the connection holes 430 is located between the terminal portion 411 and the base portion 412 and is a hole extending in the circular arc direction around the terminal center point C.

In one or more embodiments of the present disclosure, side grooves (e.g., concave-shaped grooves) 425 are respectively provided on both sides of the bridge part 420 facing the connection holes 430. In one or more embodiments, the side groove 425 may be formed only on one side or the other side of the bridge part 420. In addition, in one or more embodiments, a plurality of side grooves 425 may be formed on one side of one of the bridge parts 420, and a single side groove 425 may be formed on the other side of the bridge part 420. In one or more embodiments, a single side groove 425 may be formed on one side of one of the bridge parts 420, and a plurality of side grooves 425 may be formed on the other side of the bridge part 420.

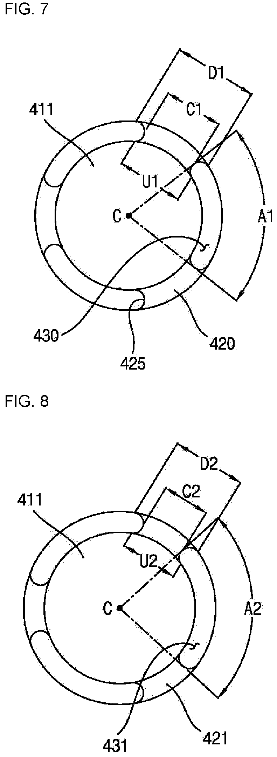

FIGS. 7 to 9 are plan views illustrating the terminal portion 411 and the bridge part 420 according to one embodiment of the present disclosure. As shown in FIGS. 7 to 9, the terminal portion 411 and the base portion 412 are connected together by the bridge parts 420.

In one or more embodiments, a width of a portion of the bridge part 420 connected to the terminal portion 411 is defined as an upper width U1, and a width of a portion of the bridge part 420 connected to the base portion 412 is defined as a lower width D1. In addition, in one or more embodiments, a portion of the bridge part 420 having the narrowest width is defined as a center width C1.

An upper part of each of the bridge parts 420 is connected to the terminal portion 411, and thus, a length of the upper portion of the bridge part 420 connected to the terminal portion 411 is referred to as the upper width U1. The portion of the bridge part 420 connected to the terminal portion 411 extends in the circular arc direction, but for convenience of description, the portion will be described as extending in a left-and-right width direction. Thus, in one or more embodiments of the present disclosure, the upper width U1 may be defined as a length of an upper end of the bridge part 420 in a width direction.

A lower portion of the bridge part 420 is connected to the base portion 412, and thus a length of the lower portion of the bridge part 420 connected to the base portion 412 is referred to as the lower width D1. The portion of the bridge part 420 connected to the base portion 412 extends in the circular arc direction, but for convenience of description, the portion will be described as extending in the left-and-right width direction. Thus, in one or more embodiments of the present disclosure, the lower width D1 may be defined as a length of a lower end of the bridge part 420 in the width direction.

In one or more embodiments, the side grooves 425 are formed on both sides of the bridge part 420, and thus the center width C1 located at the center of the bridge part 420 may be less than the upper width U1 and/or the lower width D1. Due to the shape of the side groove 425, the position of the center width C1 may vary in the vertical direction. The side groove 425 may be formed to have different curvatures or groove shapes at upper and lower portions with respect to the portion thereof in which the center width C1 is formed.

In the cap-up 410 according to one embodiment of the present disclosure, a width of the portion of the bridge part 420 connected to the terminal portion 411 may be less than a width of the portion of the bridge part 420 connected to the base portion 412. That is, the upper width U1 may be less than the lower width D1. In one or more embodiments, the lower width D1 is greater than the upper width U1 so that the rigidity of the bridge part 420 may be achieved, and when the internal pressure of the can 100 increases, the bridge part 420 fractures around the upper width U1, so that gas may be quickly discharged.

In the cap-up according to one embodiment of the present disclosure, the lower width D1 may be greater than each of the upper width U1 and the center width C1. In one or more embodiments, the lower width D1 may be greater than the upper width U1, and the upper width U1 may be greater than the center width C1. Thus, the bridge part 420 may fracture around the center width C1. In one or more embodiments, the upper width U1 may be greater than the center width C1. Thus, since the lower width D1 supporting the lower portion of the bridge part 420 is greater than the upper width U1 and the center width C1, the bridge part 420 may be stably supported.

Next, a ratio of the center width C1 to the lower width D1 for each angle of the connection hole 430 will be described with reference to FIGS. 7 to 9 and Table 1 below.

**[Table 1]**

| | Diameter of terminal part (mm) | Angle of connection hole (°) | Center width (mm) | Lower width (mm) | Difference between lower width and center width | Ratio of center width to lower width (%) |
|---|---|---|---|---|---|---|
| 1 | 9 | 80 | 3.44 | 4.91 | 1.47 | 70 |
| 2 | 9 | 90 | 2.68 | 4.00 | 1.32 | 67 |
| 3 | 9 | 100 | 1.80 | 3.05 | 1.25 | 59 |

As shown in FIG. 7, in an embodiment in which the upper width U1 of the bridge part 420 is approximately 3.91 mm, the center width C1 thereof is approximately 3.44 mm, and the lower width D1 thereof is approximately 4.91 mm, a first angle A1, which is an angle of the connection hole 430, is approximately 80°. The angle of the connection hole 430 is an angle between one end and the other end of the connection hole 430, which is in contact with the bridge parts 420, around the terminal center point C. A value obtained by subtracting the center width C1 from the lower width D1 is 1.47 mm, and a ratio of the center width C1 to the lower width D1 is approximately 70%. The ratio of the center width C1 to the lower width D1 is referred to as I, and I is defined as I=(center width C1/lower width D1)x100. In one or more embodiments, I is 70. As shown in FIG. 8, in an embodiment in which an upper width U2 of a bridge part 421 is approximately 3.19 mm, a center width C2 thereof is approximately 2.68 mm, and a lower width D2 thereof is approximately 4 mm, a second angle A2, which is an angle of a connection hole 431, is approximately 90°. A value obtained by subtracting the center width C2 from the lower width D2 is approximately 1.32 mm, and a ratio (I) of the center width C2 to the lower width D2 is approximately 67%.

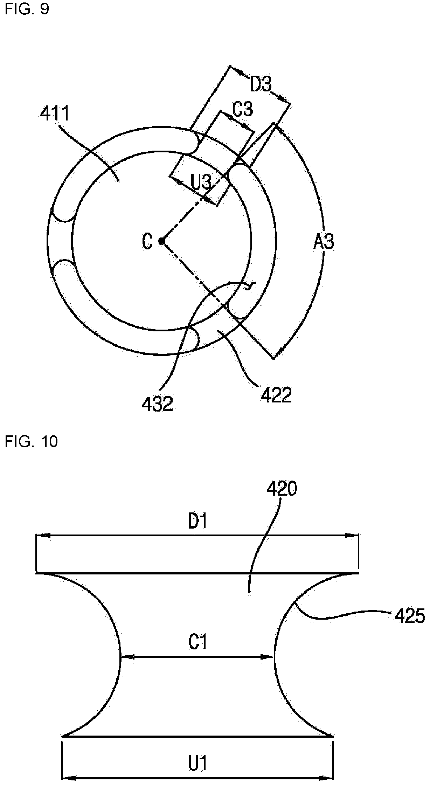

As shown in FIG. 9, in an embodiment in which an upper width U3 of a bridge part 422 is approximately 2.44 mm, a center width C3 thereof is approximately 1.8 mm, and a lower width D3 thereof is approximately 3.05 mm, a third angle A3, which is an angle of a connection hole 432, is approximately 100°. A value obtained by subtracting the center width C3 from the lower width D3 is approximately 1.25 mm, and a ratio (I) of the center width C3 to the lower width D3 is approximately 59%.

As shown in FIGS. 7 to 9, in an embodiment in which an area of the terminal portion 411 is the same, the lower width D1 is formed to have the largest value, followed by the upper width U1 and the center width C1. In addition, in an embodiment in which the ratio of the center width C1 to the lower width D1 ranges from approximately 57% to approximately 59%, deformation of the bridge part 420 may be prevented during normal use of the bridge part 420, and in an emergency situation, the bridge part 420 may be induced to fracture to quickly discharge gas.

A difference according to a change in the ratio of the upper width U1 to the lower width D1 of the bridge part 420 will be described with reference to Table 2 below.

**[Table 2]**

| | Diam eter of termi nal part (mm) | Angle of connec tion hole (°) | Upp er widt h (m m) | Cen ter widt h (mm ) | Low er widt h (m m) | Differe nce betwe en lower width and upper width | Differe nce betwe en center width and lower width | Rat io of upp er wid th to low er width (%) | PPR effect | Deformat ion preventio n |
|---|---|---|---|---|---|---|---|---|---|---|
| 1 | 9 | 80 | 3.8 | 3.6 | 5 | 1.2 | 1.4 | 76 | Rigidity increases | No deformat ion |
| 2 | 9 | 108 | 3.6 | 3.4 | 5 | 1.4 | 1.6 | 72 | Rigidity increases | No deformat ion |
| 3 | 9 | 108 | 3.4 | 3.2 | 5 | 1.6 | 1.8 | 68 | Rigidity decreases/effec tiveness increases | No deformat ion |
| 4 | 9 | 108 | 3.2 | 3.0 | 5 | 1.8 | 2.0 | 64 | Rigidity decreases/effec tiveness increases | No deformat ion |
| 5 | 9 | 108 | 3.0 | 2.8 | 5 | 2.0 | 2.2 | 60 | Rigidity decreases/effec tiveness increases | No deformat ion |
| 6 | 9 | 108 | 2.8 | 2.6 | 5 | 2.2 | 2.4 | 56 | Rigidity decreases/effec tiveness increases | Deformat ion occurs/ri gidity decrease s |
| 7 | 9 | 108 | 2.6 | 2.4 | 5 | 2.4 | 2.6 | 52 | Rigidity decreases/effec tiveness increases | Deformat ion occurs/ri gidity decrease s |
| 8 | 9 | 108 | 2.4 | 2.2 | 5 | 2.6 | 2.8 | 48 | Unable to produce | |

As shown in Table 2, the bridge part 420 may be configured such that the ratio of the upper width U1 to the lower width D1 ranges from approximately 52% to approximately 68% and a value of the lower width D1 is fixed. The ratio of the upper width U1 to the lower width D1 is referred to as I, and I is defined as I=(upper width U1/lower width D1)x100. In one or more embodiments, a value of the ratio I may range from approximately 52 to approximately 68. In one or more embodiments, the portion of the bridge part 420 in which the value of the ratio I ranges from approximately 52 to approximately 56 is referred to as a first section and a section in which the value of the ratio I ranges from approximately 57 to approximately 58 is referred to as a second section, and the cap-up 410 may exhibit reduced rigidity in the first section compared to the second section.

In one or more embodiments in which the ratio I is in a range from approximately 52 to approximately 68, in a normal situation, the bridge part 420 may not be deformed or may be deformed slightly. In an emergency situation in which a gas pressure inside the can 100 increases, the bridge part 420 may be fractured by the gas pressure.

In the first section in which the value of the ratio I ranges from approximately 52 to approximately 56, the upper width U1 is less than the lower width D1, and thus, the possibility of deformation or breaking occurring at the center width C1 or the upper width U1 is high.

In the second section in which the value of the ratio I ranges from approximately 57 to approximately 58, the upper width U1 is relatively greater than the lower width D1 compared to the first section, and thus the possibility of deformation or breaking occurring at the center width C1 or the upper width U1 is lower than that in the first section. However, since the upper width U1 is less than the lower width D1 even in the second section, when an internal gas pressure is greater than a set gas pressure, deformation or breaking occurs at the upper width U1 or the center width C1, so that gas may be quickly discharged.

The rigidity of the bridge part 420 increases when the value of ratio I is greater than or equal to 72, and thus the bridge part 420 may not be deformed or cut even by the gas pressure, and the gas generated inside the can 100 may not be quickly discharged to the outside of the cap-up 410, thereby increasing the risk of safety accidents. Therefore, in one or more embodiments, the value of the ratio I may not be greater than or equal to approximately 72.

In addition, since the rigidity of the bridge part 420 is too weak when the value of I is less than or equal to approximately 48, the bridge part 420 may be easily deformed even during normal use, and may block the connection hole 430, and thus it is difficult to discharge gas generated inside the can 100. Thus, in one or more embodiments, the value of the ratio I may not be less than or equal to approximately 48.

The units of the ratio I may be %, and the units of the ratio I may be varied as needed.

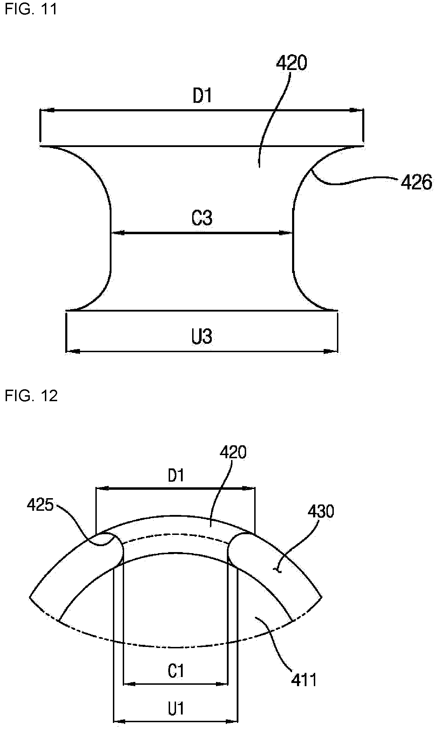

FIGS. 10 and 11 are views illustrating side grooves 425 and 426 formed in the bridge part 420 according to one embodiment of the present disclosure. As shown in FIG. 10, along a direction in which the curvature of the side groove 425 increases, the center width C1 may decrease, and along a direction in which the curvature of the side groove 425 decreases, the center width C1 may increase.

In an embodiment in which a portion of the bridge part 420 having a narrowest width is referred to as the center width C1, the curvature of the side groove 425 and the center width C1 may be inversely proportional to each other. In another embodiment of the present invention, the center width C1 may be the width of the portion located at the center of the bridge part 420.

The curvature of the side groove 425 shown in FIG. 10 may be greater than the curvature of the side groove 426 shown in FIG. 11. In addition, in an embodiment in which the lower width D1 shown in FIG. 10 is the same (or substantially the same) as the lower width D1 shown in FIG. 11, the center width C1 shown in FIG. 10 may be greater than the center width C3 shown in FIG. 11. In addition, the upper width U1 shown in FIG. 10 may be greater than the upper width U3 shown in FIG. 11.

The rigidity of the bridge part 420 may be adjusted according to the curvatures of the side grooves 425 and 426. In an embodiment in which the curvature of the side groove 426 is small, the center width C1 increases, so that the rigidity of the bridge part 420 increases. In addition, in an embodiment in which the curvature of the side groove 425 is large, the center width C1 decreases, so that the rigidity of the bridge part 420 increases. The curvature and radius of curvature have an inversely proportional relationship.

FIG. 12 is a view illustrating a state in which the upper width U1 of the bridge part 420 according to one embodiment of the present disclosure is greater than the center width C1. As shown in FIG. 12, in an embodiment in which the lower width D1, the upper width U1, and the center width C1 of the bridge part 420 gradually decrease in this order, the side groove 425 facing the connection hole 430 may form a groove with a radius of curvature. That is, the side groove 425 facing the connection hole 430 may form a groove with a radius of curvature.

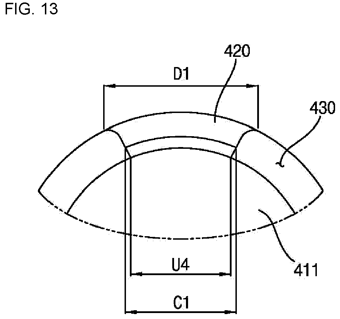

FIG. 13 is a view illustrating a configuration in which the center width C1 of the bridge part 420 according to one embodiment of the present disclosure is greater than an upper width U4. As shown in FIG. 13, in an embodiment in which the lower width D1, the center width C1, and the upper width U4 of the bridge part 420 gradually decrease in this order, the side grooves 425 located on an upper side of the center width C1 may form a curvature, and the side grooves 425 located on a lower side of the center width C1 may be formed in a straight line. In this embodiment, the lower width D1 may be greater than the center width C1, and the center width C1 may be greater than the upper width U4.

As described above, the compressive strength of the cap-up 410 can be adjusted by adjusting the upper width U1, the center width C1, and the lower width D1 of the bridge part 420 provided in the cap-up 410, thereby securing a gas discharge flow path. In addition, it is possible to improve the reliability of passive propagation resistance (PPR) test results and improve the safety of the cylindrical secondary battery 1. The PPR in the secondary battery is a technique that improves the safety of the entire battery pack by controlling the spread of an abnormal event (e.g., thermal runaway) of a secondary battery to neighboring cells, even when the abnormal event starts in one cell.

According to an embodiment of the present disclosure, the compressive strength of a cap-up can be adjusted by adjusting an upper width, a center width, and a lower width of a bridge part provided in the cap-up, thereby securing a gas discharge flow path.

In addition, it is possible to improve the reliability of passive propagation resistance (PPR) test results and improve the safety of a cylindrical secondary battery.

The above description is only one embodiment for implementing the present disclosure, and the present disclosure is not limited to the above-described embodiments. As claimed in the following claims, the technical concept of the present disclosure will be considered to the extent that various modifications can be made by anyone skilled in the art without departing from the gist of the present disclosure.

## Claims

1. A cylindrical secondary battery (1) comprising:
an electrode assembly (200);
a can (100) accommodating the electrode assembly (200);
a cap assembly (400) electrically coupled to the electrode assembly (200) and coupled to one side of the can (100) to close an inlet of the can (100), the cap assembly (400) comprising a cap-up (410) exposed to an outside; and
a gasket (500) between the cap assembly (400) and the can (100),
wherein the cap-up (410) comprises:
a terminal portion (411) having a circular shape;
a base portion (412) spaced apart from the terminal portion (411) and surrounding an outer side of the terminal portion (411); and
a plurality of bridge parts (420, 421, 422) configured to connect the terminal portion (411) to the base portion (412), the plurality of bridge parts (420, 421, 422) being spaced apart from each other with a connection hole (430, 431, 432) therebetween, and
a width of a portion of each bridge part (420, 421, 422) of the plurality of bridge parts (420, 421, 422) connected to the terminal part (411) is less than a width of a portion of the each bridge part (420, 421, 422) of the plurality of bridge parts (420, 421, 422) connected to the base portion (412).

2. The cylindrical secondary battery (1) of claim 1, wherein the width of the portion of the each bridge part (420, 421, 422) connected to the terminal portion (411) is an upper width (U), the width of the portion of the each bridge part (420, 421, 422) connected to the base portion (412) is a lower width (D), the width of the portion of the each bridge part (420, 421, 422) located at a center is a center width (C), and the lower width (D) is greater than each of the upper width (U) and the center width (C).

3. The cylindrical secondary battery (1) of claim 2, wherein the lower width (D) is greater than the upper width (U), and
wherein the upper width (U) is greater than the center width (C).

4. The cylindrical secondary battery (1) of claim 2, wherein the lower width (D) is greater than the center width (C), and
wherein the center width (C) is greater than the upper width (U).

5. The cylindrical secondary battery (1) of claim 2, wherein a ratio I of the upper width (U) to the lower width (D) is defined as I=(the upper width/the lower width)x100, and wherein I ranges from approximately 52 to approximately 68.

6. The cylindrical secondary battery (1) of claim 5, wherein a section in which a value of the ratio I ranges from approximately 52 to approximately 56 is a first section, a section in which the value of the ratio I ranges from approximately 57 to approximately 58 is a second section, and a rigidity of the cap-up (410) in the first section is lower than that in the second section.

7. The cylindrical secondary battery (1) of any one of claims 2 to 6, wherein a bridge part (420, 421, 422) of the plurality of bridge parts (420, 421, 422) comprises concave grooves on both sides of the bridge part (420, 421, 422), and wherein each of the concave grooves faces the connection hole (430, 431, 432) at one of the sides of the bridge part (420, 421, 422).

8. The cylindrical secondary battery (1) of claim 7, wherein along a first direction a curvature of each of the concave grooves increases and the center width (C) decreases, and
wherein along a second direction the curvature of each of the concave grooves decreases and the center width (C) increases.

9. The cylindrical secondary battery (1) of any one of the preceding claims, wherein
the plurality of bridge parts (420, 421, 422) are be spaced apart from each other at substantially a same angle.

10. The cylindrical secondary battery (1) of any one of the preceding claims, wherein the cap assembly (400) further comprises:
a cap-down (460) below the cap-up (410);
a vent plate (450, 450') between the cap-up (410) and the cap-down (460); and
an insulator (470) between the vent plate (450, 450') and the cap-down (460).

11. A cylindrical secondary battery (1) comprising:
a can (100) having a cylindrical shape and an upper side that is open;
an electrode assembly (200) accommodated in the can (100) with an electrolyte; and
a cap assembly (400) coupled to the upper side of the can (100), insulated from the can (100), electrically coupled to the electrode assembly (200), and comprising a cap-up (410) exposed to an outside,
wherein the cap-up (410) comprises:
a terminal portion (411) having a circular shape;
a base portion (412) spaced apart from the terminal portion (411), located below the terminal portion (411), and having a ring shape; and
a plurality of bridge parts (420, 421, 422) configured to connect the terminal portion (411) to the base portion (412), the plurality of bridge parts (420, 421, 422) being spaced apart from each other with a connection hole (430, 431, 432) therebetween, and
wherein a width of a portion of each bridge part (420, 421, 422) of the plurality of bridge parts (420, 421, 422) connected to the terminal portion (411) is an upper width (U), a width of a portion of the each bridge part (420, 421, 422) of the plurality of bridge parts (420, 421, 422) connected to the base portion (412) is a lower width (D), and the lower width (D) is greater than the upper width (U).

12. The cylindrical secondary battery (1) of claim 11, further comprising a gasket (500) between the cap assembly (400) and the can (100), wherein the gasket (500) comprises an insulating material, and wherein the gasket (500) surrounds an edge of the cap assembly (400).

13. The cylindrical secondary battery (1) of claim 12, wherein the can (100) comprises:
a bottom part (110) having a circular shape;
a side part (130) extending upward from an edge of the bottom part (110);
a beading part (132) extending from the side part (130) and recessed inward at an upper part of the electrode assembly (200) to support a lower part of the gasket (500); and
a crimping part (134) extending upward from the beading part (132) and bent inward and surrounding an upper part of the gasket (500).

14. The cylindrical secondary battery (1) of any one of claims 11 to 13, wherein the each bridge part (420, 421, 422) comprises concave grooves on both sides of the each bridge part (420, 421, 422), wherein each of the concave grooves faces the connection hole (430, 431, 432) along one of the sides of the each bridge part (420, 421, 422), and
wherein a portion of the each bridge part (420, 421, 422) having a narrowest width is a center width (C), and wherein a curvature of each of the concave grooves and the center width (C) are inversely proportional to each other.

15. The cylindrical secondary battery (1) of claim 14, wherein the upper width (U) is greater than the center width (C).
